# EUROPEAN PATENT APPLICATION

(11) **EP 3 388 995 A1**
(43) Date of publication of application: **17.10.2018**
(21) Application number: 17166269.5
(22) Date of filing: 12.04.2017
(51) Int. Cl.: G06Q 20/40, G07G 1/00, G06Q 20/20

(54) **METHOD AND DEVICE FOR PAYMENT MANAGEMENT**

(71) Applicant: All Now Corp, Coral Gables, Florida 33134 (US)
(72) Inventor: XURIGUE BLANCH, Miguel, 08034 BARCELONA (ES); GARCIA PARRILLA, Javier, 43005 TARRAGONA (ES)
(74) Representative: Sugrañes Patentes y Marcas

(57) **Abstract**

The device and the method for payment management allow performing the steps of (A) sending one or more items to be paid (P) to a payment management device (1); (B) authenticating a portable identification device (2) to obtain a user identifier (ID); (C) sending the user identifier from the previously authenticated portable identification device to the payment management device; (D) selecting one or more items to be paid from the set of items to be paid; (E) the payer providing payer biometric data (BIO_P) to the payment management device; (F) verifying that the user identifier and the payer biometric data correspond to the same user; and (G) completing payment of the items previously selected.

## Description

### Technical field of the invention

The invention relates to a payment management method and device, more particularly to a payment management method and device with enhanced verification of the identity of the payer.

### Background art

As is known, currently, when a user wants to make a purchase of a product they have the possibility of purchasing by cash or by credit card. The use of a credit card is more convenient because it allows the user to make purchases and payments without having to carry large amounts of cash.

However, credit cards do not have effective measures against identity theft, so it is not always possible to verify that the user who actually makes the purchase, i.e. the payer, really corresponds with the identity of the user in-person.

To solve this problem, methods and procedures such as those described in documents US2007/0288320 and US32003/0167207, wherein it is suggested to check the identity of the user through biometric data, namely a fingerprint, are known. However, these devices only check the identity of the user upon being provided with the payer's data, so they could be manipulated and fraudulent payments could be made.

It is, therefore, an object of the present invention to disclose a method and device for payment management, which allows increasing the security in making the payment.

### Description of the invention

The payment management method of the present invention is characterised in that it comprises the steps of sending one or more items to be paid to a payment management device; authenticating a portable identification device to obtain a payer identifier; sending the payer identifier from the previously authenticated portable identification device to the payment management device; selecting one or more items to be paid from the set of items to be paid; the payer providing biometric data to the payment management device; verifying that the payer identifier and the payer's biometric data correspond to the same user; and completing the payment of the items previously selected by the payer, advantageously allowing doubly verifying that the user who has been identified as payer through the authenticated portable identification device of the one or more selected items to be paid is actually the legitimate user.

In one embodiment variant, the step of authenticating the portable identification device comprises the step of providing biometric data to the portable identification device and the step of comparing the biometric data in a database to obtain a user identifier, so that a first level of security of verification of the identity of the payer is obtained.

In one embodiment variant, the biometric data for authenticating the portable identification device are biometric data of the same type as those provided to the payment management device, so that the biometric data requested from the payer in the payment management device may be of the same origin, not only by providing the payer with verification of his/her identity for payment, but also ensuring that the biometric data can be provided. It is even envisaged that the portable identification device, on sending the payment identifier to the payment management device, may specify the nature or type of biometric data to be requested, for example if the biometric data to authenticate the portable identification device come from a fingerprint, the portable identification device can pass this information to the payment management device so that the payment management device preferably uses the same type of biometric data, in this case, a fingerprint. Naturally, biometric data of other types or nature can be used, such as voice, face images, iris images, palm image, temperature maps or any other. It is also envisaged that the type or nature of the biometric data used in the portable identification device for its authentication is different from the type or nature of the biometric data used in the payment management device for verifying that the payer identifier and the payer's biometric data correspond to the same user.

In one embodiment variant, the step of verifying that the payer identifier and the biometric data of the payer correspond to the same user comprises a step of sending the biometric data to a server, a step of obtaining the server the user identifier associated with the biometric data from a database and a step of comparing the user identifier obtained from the database with the payer identifier to perform the verification, advantageously achieving that the biometric data are processed on the server, potentially requiring less computing power in the payment management device. It is envisaged that the payer identifier and user identifier are unique and equal for the same user, for example a unique alphanumeric code or number for each user.

More specifically, in an embodiment variant, the step of comparing the user identifier obtained from the database with the payer identifier to perform the verification is performed in the payment management device, the server returning the user identifier associated with the biometric data so that the payment management device only has to compare if the payer identifier provided by the payer corresponds to the user identifier corresponding to the biometric data sent, for example data taken from a fingerprint.

And in another embodiment variant, it is contemplated that the step of comparing the user identifier obtained from the database with the payer identifier to perform the verification is performed on the server, the payment management device providing the server with the payer identifier, so that the payment management device only receives one notice corresponding to whether the payer has been verified, a minimum computation being necessary in the payment management device.

In another embodiment variant, the step of verifying that the payer identifier and the biometric data of the payer correspond to the same user comprises the step of sending the payer identifier to a server, the step of the server obtaining the biometric data associated with the payer identifier from a database and the step of comparing the biometric data associated with the payer identifier with the biometric data for performing the verification, advantageously achieving that the data processing on the server is faster and biometric data obtained from the payer do not have to be transferred, but only comparing the biometric data returned by the server, which may be, for example, a summary function of the data obtained from the biometric data, such as the image of a fingerprint or a map of temperatures of the fingerprint.

Specifically, in an embodiment variant, it is contemplated that the step of comparing the biometric data associated with the payer identifier with the biometric data to perform the verification is performed in the payment management device, the server returning the biometric data associated with the payer identifier associated with the biometric data.

And, in another embodiment variant, it is contemplated that the step of comparing the biometric data associated with the payer identifier with the biometric data to perform the verification is performed on the server, the payment management device providing the server with the biometric data.

It is envisaged that the method may be performed by different payers so that, after the steps of sending one or more items to be paid to a payment management device, each payer authenticates a portable identification device to obtain a payer identifier; the payer identifier is sent from the previously authenticated portable identification device to the payment management device; it selects one or more items to be paid from the set of items to be paid, it provides biometric data to the payment management device, and upon verifying that the payer identifier and the payer's biometric data correspond to the same user; the payment of the items previously selected by the payer is completed. In this way, different payers can choose and pay for different items previously selected. It is envisaged that the verification that the identifier of each payer and his/her biometric data correspond to the same user can be made one by one, i.e., a payer selects the items to be paid and his/her identity is verified and the payment is made, or in one go, so that only when all the items to be paid have been selected the identity of all payers is verified and the payment is made, for example through a bank checking account associated with each payer or a credit account.

In another embodiment variant, the biometric data are biometric data obtained from a fingerprint, such as the fingerprint image or any other information that can be obtained from a fingerprint and be processed conveniently, for example, by known fingerprint readers.

It is also disclosed that, in a variant of interest, the method further comprises the payment management device obtaining biometric data from a user with in-person authorisations to pay; selecting one or more outstanding items to be marked as paid in-person; and if the biometric data obtained from the user with in-person authorisations to pay correspond to the biometric validation data associated with the identity of the user with in-person authorisations to pay, marking the set of items selected as already paid, so that items to be paid can be eliminated from the one or more items to be paid previously sent to a payment management device, for example when these items are paid in cash or any other alternative way, for example by means of conventional credit card.

The payment management device of the present invention is a point-of-sale device comprising means for receiving one or more items to be paid; means for presenting and selecting one or more of the items to be paid; means for receiving a payer identifier from a previously authenticated portable identification device; means for obtaining biometric data from a payer; means for verifying that the payer identifier and the biometric data correspond to the same user; and means for completing the payment of the set of items selected by the payer.

It is envisaged that the means for obtaining payer identities from a previously authenticated portable identification device comprises wireless transmission means.

It is also envisaged that the means for presenting and selecting the set of items to be paid comprises a touch screen.

In one variant of interest, the means for obtaining biometric data comprises a fingerprint reader.

In an embodiment variant, it is envisaged that the device further comprises a folder-shaped cover, the means for presenting and selecting the one or more items to be paid being arranged within the folder and the means for obtaining biometric data from a payer being arranged on the outside of the folder, so that when the folder is open only one or more items to be paid by the payer can be selected, it being necessary for the payer to close the folder to provide the biometric data to the payment management device to verify that the payer identifier and the biometric data of the payer correspond to the same user and thus complete the payment of the items previously selected by the payer.

In one embodiment variant, the means for receiving a set of items to be paid comprises a bar code reader, so that the step of sending one or more items to be paid to a payment management device can be performed by reading the bar codes of products to be bought and paid for.

In another embodiment variant, the means for receiving a set of items to be paid comprises a near field radio frequency receiver, so that the step of sending one or more items to be paid to a payment management device can be performed by reading the radio frequency tags of products to be bought or paid for. It is also envisaged that the step of sending one or more items to be paid to a payment management device can be performed through a dedicated device that transmits to the payment management device the one or more items to be paid.

In another variant of interest, the device further comprises a means for being fastened to a handle of a shopping trolley, such as a clip or a holder, which enables the device to be placed on a shopping trolley enabling the accumulation of products to be bought in a supermarket, these products being considered the items.

It is further provided that the portable identification device may comprise means for obtaining biometric data from a user; means for activating a user profile from the biometric data obtained, enabling access to data associated with the activated user profile; and means for deactivating an activated user profile, disabling access to the data associated with the user profile, comprising a sensor that, upon activation, deactivates the activated user profile. The portable device allows selecting and activating a user profile from among the different user profiles previously configured from a user's biometric data, such as a fingerprint, to enable access to the data associated with the user profile that can be used by different peripheral devices that are part of the portable device, such as screens, radio frequency emitters, light indicators, etc. Advantageously, access to the data associated with the user profile can be disabled by the actuation of a sensor, such as a tactile sensor arranged on the surface of the device, which, when signalling its actuation to the means for activating user profiles, deactivates the user profile activated. This allows the portable authentication device to be configured with multiple user profiles, each associated with respective data, which could be, in part, common to different user profiles, only allowing access to the data corresponding to the user profile whose biometric data have been obtained. The data associated with user profiles may be stored in the same memory, whose access will enable or disable the means for activating or deactivating a user profile, for example by enabling or disabling the reading of the address range of the memory containing the user profile data. Naturally, it is also envisaged that access to the data associated with the user profile may be performed in other ways, such as through an intermediate data management program, which from a data structure incorporating the biometric data and, optionally, the type of data to be accessed, return a data structure containing the obtained data. It is envisaged that the means for obtaining biometric data from the user may be either a fingerprint sensor which allows capturing the user's fingerprint, a camera that captures the user's facial image, a microphone that allows capturing the user's voice or any other sensor that allows obtaining data from which the user can be categorised and allows their possible association with one of the user profiles previously established in the device. It is envisaged that the data associated with user profiles be, for example, credentials for access to other remote devices that can be controlled through instructions preferably sent by radio frequency through the portable device such as domestic appliances, locks, vehicles, etc., allowing the user to remotely control said remote devices upon activation of the corresponding user profile. Naturally, for each remote device, the portable device must have configured the typology of the remote device type that it is and, therefore, the actions that the user can perform on said remote devices through the portable device. For example, several remote devices of domestic appliance type will allow the user to determine the action to be performed, such as, if the remote device is a television, changing channel or volume level through peripheral devices of the portable device, such as a touch screen. It is also envisaged that the action is performed automatically, so that upon activation of the user profile the device periodically sends radio signals enabling the opening of previously configured electronic locks. In this way, it is possible for the device of the present invention to incorporate data relating to different user profiles, with their respective credentials, so that only when a user associated with a user profile uses the device will they have access to the remote devices control only associated with his/her user profile. Naturally, although the data associated with the activated user profile may be preferably stored internally in the device, it is also envisaged that these are stored in an external database, accessible by radio frequency.

It is envisaged that the sensor of the portable identification device is tactile, advantageously allowing that, by holding or manipulating by hand the device, the activated user profile is deactivated, thus preventing that, upon activation of a user profile by a first user, another user on picking up the device has access to the data associated with the user profile of the first user. Naturally, if the first user who previously activated the user profile picks up the device, the user profile will also be deactivated, although in this case, this first user only has to re-activate his/her user profile by means of the contribution of his/her biometric data, such as the fingerprint. It is envisaged that, when the means for obtaining the biometric data is a fingerprint sensor, they are positioned on the surface of the device, preferably in a location such that it coincides with the position of the user's thumb in a normal grip of the device, in order to facilitate the reactivation of the user profile of this first user upon activating the touch sensor and deactivating the user profile.

The sensor of the portable identification device will preferably be arranged on the surface of the device, favouring contact with the sensor upon picking up the device and thus preventing another user from having access to the user profile data of the previous user. This sensor is envisaged to comprise a conductive sheet, which favours contact between the user's fingers and the sensor upon the user picking up the device. The conductive sheet may be of graphene, allowing the sheet to be thin and so that it does not form protrusions on the surface of the device. Naturally, it is also contemplated that the conductive sheet may be of other materials and comprises graphene, such as a graphene layer arranged on a polymer base.

Each user profile will preferably include previously obtained biometric data patterns of one or more users that are associated with a user profile, advantageously allowing to associate the biometric data obtained by the means to obtain biometric data with the biometric data patterns in order to determine whether a user profile must be activated, allowing access to the data associated with said user profile.

The portable identification device may comprise means for deactivating an activated user profile, which will be disabled while the means for obtaining biometric data from a user is actuated, while preventing a user profile from being simultaneously activated and deactivated, enabling the user to be identified.

The portable identification device may further comprise means for disabling, for a predetermined time, means for deactivating a user profile upon activating a user profile, allowing the user, during this predetermined time, to interact, upon activation of a user profile, with the device without deactivating the user profile, for example accessing menus using peripheral devices of the device, such as buttons or a touch screen or even through a camera or a microphone, reacting to gesture or voice orders. In this way, during the predetermined time, it is allowed that the user may manipulate the device.

The portable identification device may further comprise warning means that are activated during the predetermined time during which the means to deactivate a user profile are disabled, allowing the user to know the time during which they can manipulate the device without the previously activated user profile being deactivated. It is envisaged that such warning means may be of visual type, such as an LED indicator, a counter that is present on a screen, a beeper or any other warning means that allows a user to determine that the means to deactivate a user profile are disabled.

The portable identification device may further comprise means of emission by radio frequency, the means of emission by radio frequency being adapted to emit a signal based on the data associated with the user profile activated for the remote device control. Naturally, it is envisaged that the radio frequency means emits a signal based on data associated with the user profile activated by the user's instructions, for example, for the control of domestic appliances, in an automatic way, for example for the automatic opening of locks.

The portable identification device may further comprise a screen, the screen being adapted to display images contained within the data associated with the activated user profile. Such data may be, for example, an identity document of the user. Naturally, it is envisaged that the device may have more than one screen, for example, a screen on its front and a screen on its back, allowing to display the obverse and the reverse of an identity document. It is also envisaged that these images can be, for example, transport tickets, such as train or plane tickets, or images corresponding to credit cards. It is envisaged that, upon the activation of the user profile, the device allows selecting the image to be displayed using a menu. This image can correspond also to a control interface of a remote device, such as a domestic appliance, as it is a touch screen, so that the user can interact with the remote device. Preferably, the screen will be a low consumption screen, such as an electronic ink screen, although it is also envisaged that the screen may be of another type, such as an OLED screen or others.

The portable identification device may further comprise means for capturing energy, which power the device or recharge its batteries. Naturally, the device is provided with energy storage means, such as a battery. It is envisaged that this battery may be recharged in a known manner by connecting the device to an electrical source, for example by a connector, such as a USB connector. It is also envisaged that the battery may be recharged by induction, being able to use both the antenna of the radio frequency emission means and a dedicated inductor. It is also envisaged that the energy capturing means be energy conversion means, such as solar plates, which generate electrical energy from light, or means of converting kinetic energy into electrical energy.

It is envisaged that the portable identification device screen be tactile, allowing the user to interact with the information displayed by the screen, such as menus or control interfaces, thus allowing buttons, dials and other controls to be displayed on the screen through which the user can control both the portable device and the remote devices. In this case, the means for obtaining biometric data may be the touch screen, allowing the display of information and the input of instructions through the same peripheral device.

It is envisaged that the means for obtaining biometric data from a user of the portable identification device comprises a fingerprint sensor or an image capturing means or a microphone, thus enabling biometric data to be obtained which will be compared with previously stored biometric data to determine whether they correspond to a user profile.

It is envisaged that the portable identification device be in the form of a card, facilitating that it can be comfortably carried by the user, in his/her wallet or pocket.

### Brief description of the drawings

In order to complement the description that is being carried out and with the purpose of facilitating the understanding of the characteristics of the invention, the present description is accompanied by a set of drawings wherein, by way of a nonlimiting example, the following has been represented:
Figs. 1 to 3 show schemes of embodiment variants of the method of the present invention;
Figs. 4 to 6 show an embodiment of the payment management device during the payment management procedure for making a payment;
Figs. 7 to 9 show an embodiment of the payment management device during the payment management procedure for allowing a payment in-person;
Figs. 10 to 11 show another embodiment of the payment management device placed on a shopping trolley; and
Fig. 12 shows another embodiment of the payment management device as a point of sale terminal.

### Detailed description of the drawings

During an article acquisition process, usually a buyer selects the articles that they want to purchase in order to finally pay for the articles.

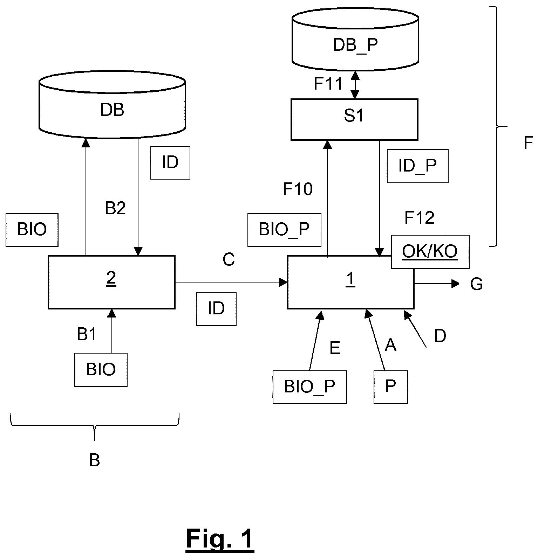

By the method of the present invention, schematically shown in Fig. 1, it is advantageously possible to manage the payments of the articles to be purchased so that a user can act as payer with greater reassurance that the user actually is considered the payer of the articles or items to be paid and that his/her identity has not been supplanted. This method is achieved by the interaction of different electronic equipment, such as one payment management device 1 and one or more portable identification devices 2. In a known manner, these electronic components will be provided with a memory and a processor for running a preprogrammed firmware, which, upon being run in the payment management device 1 and the portable identification device 2, will enable performing the method of the present invention, which will be described in detail below.

As shown in said Fig. 1, the method comprises a first step A of sending one or more items to be paid P to a payment management device 1, so that a payer can select them to proceed with their payment; a step B of authenticating a portable identification device 2 for obtaining a user identifier ID; a step C of sending the user identifier ID from the previously authenticated portable identification device 2 to the payment management device 1.

After this step, the payment management device already knows the user identification ID and will allow step D of selecting one or more items to be paid from the set of items to be paid which will finally be paid by the user whose user identification ID has been provided.

Before proceeding to payment of the selected items to be paid P, a step E is performed of providing the payer with payer biometric data BIO_P, such as biometric data obtained from a fingerprint, to the payment management device 1. Finally, after step F of verifying that the user identifier ID and the payer biometric data BIO_P correspond to the same user, a step G will be performed completing the payment of the previously selected items.

In this way, it is advantageously achieved that, in the first place, the user is authenticated through a portable identification device 2 to obtain a user identifier ID, and that the payment management device 1 obtains a second level of security before proceeding to the payment from said user identifier ID provided by the portable identification device 2 and payer biometric data BIO_P, which are expected to correspond to the user who has previously been authenticated through a portable identification device 2.

It is noted that step B of authenticating the portable identification device 2 comprises a step B1 of providing user biometric data BIO to the portable identification device 2 and the step B2 of comparing the user biometric data BIO in a database in which the user has previously been registered and which has the user biometric data BIO paired with the corresponding user identifier ID to obtain a user identifier ID, which will subsequently be used in the payment management device 1 to verify the identity of the payer, which is expected to be the same as that of the user.

Naturally, it is contemplated that the user biometric data BIO for authenticating the portable identification device 2 in step B may be biometric data of the same type as the payer biometric data BIO_P which are provided to the payment management device in step E, as well as that the user biometric data BIO for authenticating the portable identification device 2 in step B may be biometric data of the same type as the payer biometric data BIO_P. The nature or type of the biometric data may be for example data obtained from a fingerprint or a facial photograph.

In the embodiment variant shown in Fig. 1, it is emphasized that the step F of verifying that the user identifier ID and the payer biometric data BIO_P correspond to the same user comprises the step F10 of sending the payer biometric data BIO_P to a server S1, the step F11 of obtaining the server the payer identifier ID_P associated with the payer biometric data BIO_P of a payers database DB_P and the step F12 of comparing the payer identifier ID_P obtained from the payers database ID_P with the user identifier ID to perform the verification.

Specifically, in Fig. 1, it is emphasized that the step F12 of comparing the payer identifier ID_P obtained from the payers database DB_P with the user identifier ID to perform the verification is performed in the payment management device 1, the server returning the user identifier ID associated with payer biometric data ID_P.

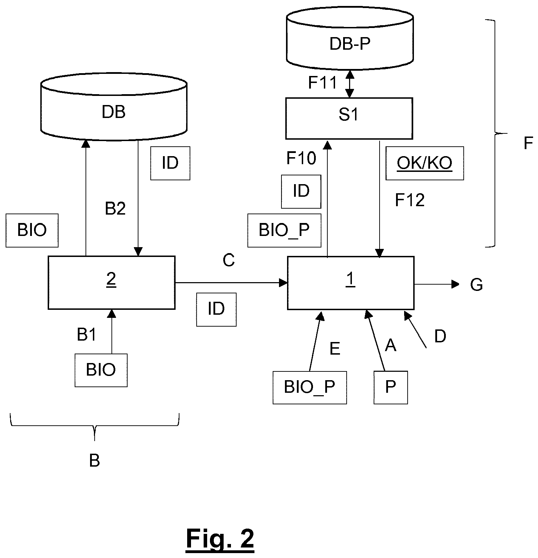

As shown in Fig. 2, it is also envisaged that the step F12 of comparing the payer identifier ID_P obtained from the payers database DB_P with the user identifier ID to perform the verification is performed in the server S1, the payment management device 1 providing the server S1 with the user identifier ID.

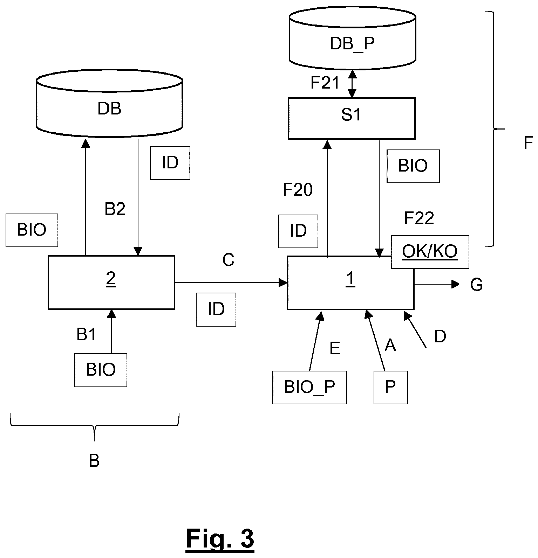

It is also envisaged that, instead of sending the payer biometric data BIO_P to the server S1, only the user identifier ID is sent to the server S1. In this case, which is shown in Fig. 3, the step F of verifying that the user identifier ID and the payer biometric data BIO_P correspond to the same user comprises the step F20 of sending the user identifier ID to a server S1, the step F21 of the server obtaining the payer biometric data BIO_P associated with the user identifier from a database and the step F22 of comparing the biometric data associated with the payer identifier with the user biometric data F22 for performing the verification. This step F22 of comparing the biometric data associated with the payer identifier with the biometric data to perform the verification is performed in the payment management device 1, the server returning the biometric data associated with the payer identifier associated with the biometric data.

Naturally, the method can be performed by one paying user and several paying users, who, after selecting each item to be paid, will perform the verification as described above.

As will be seen below, the method also contemplates the steps of the payment management device 1 obtaining biometric data from a user with in-person authorisations to pay; selecting one or more outstanding items to be marked as paid in-person; and if the biometric data obtained from the user with in-person authorisations to pay correspond to the biometric validation data associated with the identity of the user with in-person authorisations to pay, marking the set of items selected as already paid. In this way, payment assistance by a user with in-person authorisations to pay, who will have been previously registered in the remote payment management device 1, and which will allow the payment of items to be performed in-person, is contemplated, i.e. by other means of payment, such as cash, allowing items to be marked as already paid and, therefore, either removed from the list of items to be paid or marked as already paid by other means.

In addition, for carrying out the method, a payment management device 1 is used, also known as a point-of-sale or-POS- device comprising means for receiving one or more items to be paid; means for presenting and selecting 3 the set of items to be paid, such as a touch screen 4; means for receiving a payer identifier from a previously authenticated portable identification device 2 , which may be formed by wireless communication means; means for obtaining biometric data 6 from a payer, such as a fingerprint reader 9, means for verifying that the payer identifier and the biometric data correspond to the same user; and means for completing the payment of the set of items selected by the payer.

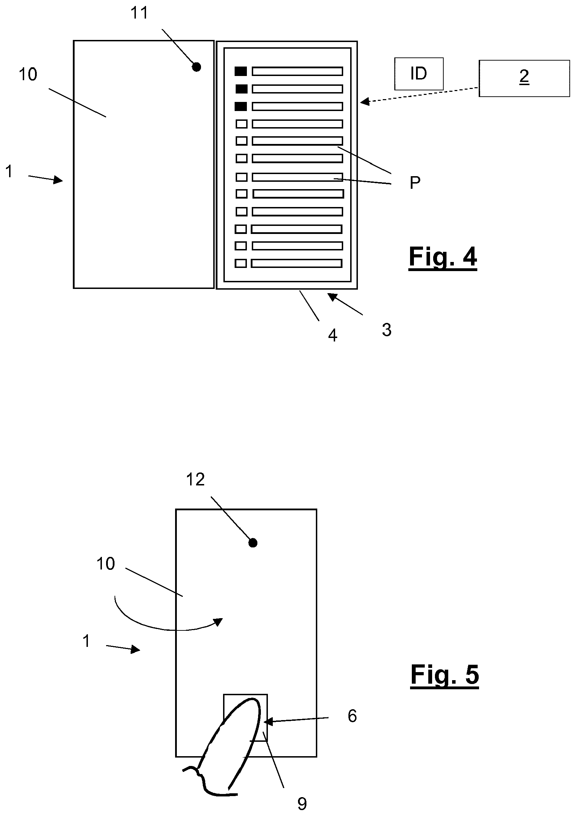

Fig. 5 shows an embodiment variant of a payment management device 1 wherein it is observed that it comprises a folder-shaped cover 10, the means for presenting and selecting 3 and the set of items to be paid P, which are a touch screen 4, being arranged in the interior 11 of the folder 10, and the means for obtaining biometric data 6 of a payer arranged on the outside 12 of the folder, so that when the cover 10 is open the means for presenting and selecting 3 the set of items to be paid can be accessed, as shown in Fig. 4, wherein, for example the first three items to be paid have been selected and the user identifier ID from the previously authenticated portable identification device 1 has been sent to the payment management device 1.

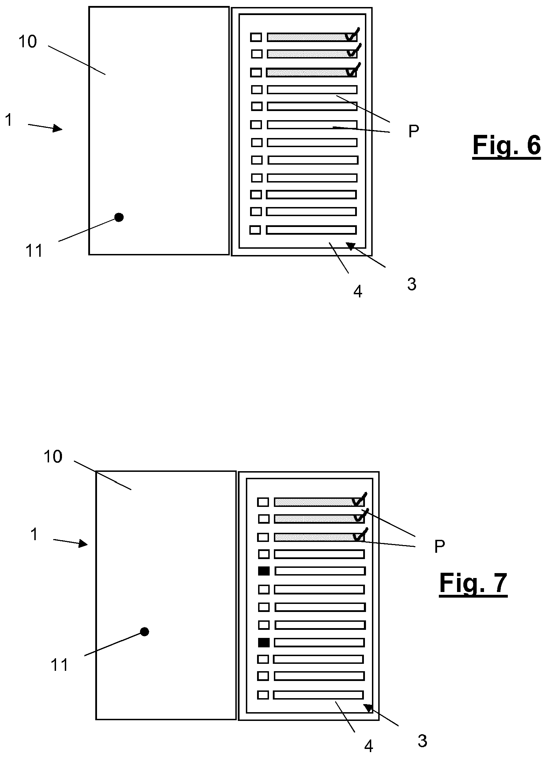

As shown in Fig. 5, when the cover 10 is closed, only the means for obtaining biometric data 6 can be accessed, so that alteration of the items to be paid P that have been previously selected is advantageously blocked, thus allowing the steps E to be performed of providing the payer biometric data BIO_P to the payment management device 1 and after step F of verifying that the user identifier ID and the payer biometric data BIO_P correspond to the same user in the above-described manner, performing step G of completing the payment of the items previously selected, with the items being marked paid as can be seen in Fig. 6, in which the first three items have been satisfactorily paid, and are marked with a tick in Fig. 6.

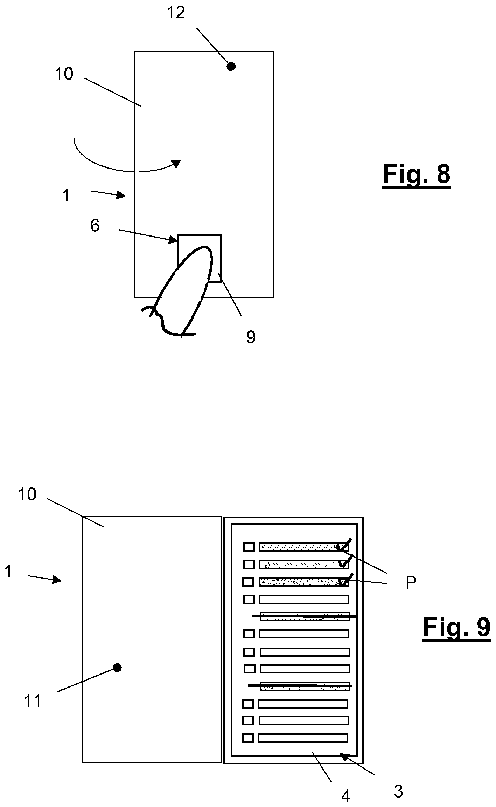

As previously mentioned, the payment management device 1 also allows marking the set of selected items as already paid, for example when a payment is made in cash or through other means. Thus, Figs. 7 to 9 present the payment management device 1, in which, after selecting one or more outstanding items to be marked as paid in-person, for example, after selecting one or more items P to be marked as paid in-person in the manner shown in Fig. 7, upon the payment management device obtaining the biometric data of a user with in-person authorisations to pay, for example, through the fingerprint of an authorised employee as shown in Fig. 8, if the biometric data obtained from the user with in-person authorisations to pay coincide with the biometric validation data associated with the identity of the user with in-person authorisations to pay, the set of items selected are marked as already paid, which are shown crossed out in Fig. 9.

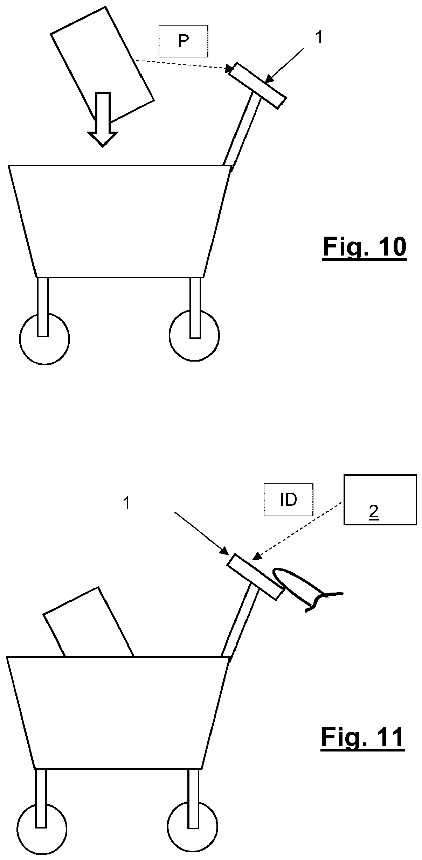

It is envisaged that the means for receiving a set of items to be paid may be different depending on the use of the point of sale device, so the means for receiving a set of items to be paid may comprise a radio frequency receiver, for example, to receive the list of items to be paid from another external device. This radio frequency receiver may be a near field radio frequency receiver if, for example, the items to be paid are articles which are provided with a radio frequency tag, such as an RFID tag which allows the point of sale device to identify the articles and obtain, in a known manner, the necessary data from a database, such as the name of the article and its price to accumulate them, as shown in Figs. 10 and 11. The means for receiving a set of items to be paid may alternatively comprise a bar code reader, so that during the purchase process the user may be marking, for example with a manual bar code reader, the articles to be acquired. For convenience, the device may additionally be provided with means for being fastened to a handle of a shopping trolley, so that during the purchase process, for example in a supermarket, the user can accumulate the articles after registering them with the point of sale device arranged on the handle of the trolley to proceed to their payment later and in a quick and easy way.

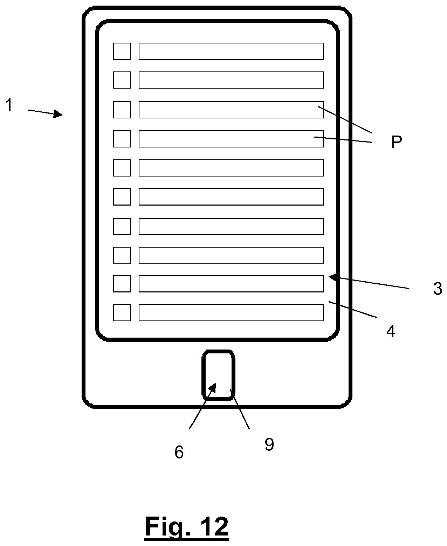

Fig. 12 presents another embodiment of the payment management device 1, in this case devoid of folder and which would be similar to the previously shown device mounted on a shopping trolley in Figs. 10 and 11. The operation of this device 1 would be analogous to that of the payment management devices 1 described above, allowing that the means for presenting and selecting 3 the set of items to be paid P, which are a touch screen 4, and the means for obtaining biometric data 6, which are a fingerprint reader 9, can be accessed simultaneously. Naturally, it is envisaged that the means for obtaining biometric data 6 may be arranged on other parts of the payment management device 1, for example on its side or even in an attached apparatus.

## Claims

1. A method for payment management **characterised in that** it comprises the steps of:
- (A) sending one or more items to be paid (P) to a payment management device (1);
- (B) authenticating a portable identification device (2) to obtain a user identifier (ID);
- (C) sending the user identifier from the previously authenticated portable identification device to the payment management device;
- (D) selecting one or more items to be paid from the set of items to be paid;
- (E) the payer providing the payer biometric data (BIO_P) to the payment management device;
- (F) verifying that the user identifier and the payer biometric data correspond to the same user; and
- (G) completing the payment of the previously selected items.

2. The method according to the preceding claim, **characterised in that** the step (B) of authenticating the portable identification device (2) comprises the step (B1) of providing user biometric data (BIO) to the portable identification device and the step (B2) of comparing the user biometric data in a users database (DB) to obtain a user identifier (ID).

3. The method according to the preceding claim, **characterised in that** the user biometric data (BIO) for authenticating the portable identification device (2) in step (B) are biometric data of the same type as the payer biometric data (BIO_P), which are provided to the payment management device in step (E).

4. The method according to any one of the preceding claims, **characterised in that** the step (F) of verifying that the user identifier (ID) and the payer biometric data (BIO_P) correspond to the same user comprise the step (F10) of sending the payer biometric data (BIO_P) to a server (S1), the step (F11) of the server obtaining the payer identifier (ID_P) associated with the payer biometric data (BIO_P) from a payers database (DB_P) and the step (F12) of comparing the payer identifier (ID_P) obtained from the payers database (ID_P) with the user identifier (ID) to perform the verification.

5. The method according to Claim 4, **characterised in that** the step (F12) of comparing the payer identifier ID_P obtained from the payers database DB_P with the user identifier (ID) to perform the verification is performed in the payment management device (1), the server returning the user identifier associated with the payer biometric data.

6. The method according to Claim 4, **characterised in that** the step (F12) of comparing the payer identifier (ID_P) obtained from the payers database (DB_P) with the user identifier (ID) to perform the verification, is performed in the server (S1), the payment management device (1) providing the server (S1) with the user identifier ID.

7. The method according to any one of Claims 1 to 3, **characterised in that** the step (F) of verifying that the user identifier (ID) and the payer biometric data (BIO_P) correspond to the same user comprises the step (F20) of sending the user identifier (ID) to a server (S1), the step (F21) of the server obtaining the payer biometric data (BIO_P) associated with the user identifier from a database and the step (F22) of comparing the biometric data associated with the payer identifier with the user biometric data (F22) for performing the verification.

8. The method according to Claim 7, **characterised in that** the step (F22) of comparing the biometric data associated with the payer identifier with the biometric data to perform the verification is performed in the payment management device, the server returning the biometric data associated with the payer identifier associated with the biometric data.

9. The method according to any one of the preceding claims, **characterised in that** the biometric data are biometric data obtained from a fingerprint.

10. The method according to any one of the preceding claims, **characterised in that** it further comprises:
- the payment management device obtaining biometric data from a user with in-person authorisations to pay;
- selecting one or more outstanding items to be marked as paid in-person; and
- if the biometric data obtained from the user with in-person authorisations to pay coincide with the biometric validation data associated with the identity of the user with in-person authorisations to pay, marking the set of items selected as already paid.

11. A payment management device (1) comprising:
- means for receiving one or more items to be paid;
- means for presenting and selecting (3) one or more items to be paid;
- means for receiving a payer identifier from a previously authenticated portable identification device (2);
- means for obtaining biometric data (6) from a payer;
- means for verifying that the payer identifier and the biometric data correspond to the same user; and
- means for completing the payment of the set of items selected by the payer.

12. The payment management device (1) according to Claim 11, **characterised in that** the means for obtaining biometric data (6) comprise a fingerprint reader (9).

13. The payment management device (1) according to any one of Claims 11 to 12, **characterised in that** it further comprises a folder-shaped cover (10), the means for presenting and selecting (3) the one or more items to be paid (P) being arranged inside the folder (11) and the means for obtaining biometric data (6) from a payer being arranged on the outside (12) of the folder.

14. The payment management device (1) according to any one of Claims 11 to 13, **characterised in that** the means for presenting and selecting (3) the set of items to be paid (P) comprise a touch screen (4).

15. The payment management device (1) according to any one of Claims 11 to 14, **characterised in that** it further comprises means for being fastened to a handle of a shopping trolley.
